# EUROPEAN PATENT APPLICATION

(11) **EP 4 322 089 A1**
(43) Date of publication of application: **14.02.2024**
(21) Application number: 23179963.6
(22) Date of filing: 19.06.2023
(51) Int. Cl.: G06Q 10/083, G01S 17/894, G06Q 50/28

(54) **SYSTEM AND METHOD FOR SCANNING AND TRACKING CARGO FOR TRANSPORT**

(30) Priority: 09.08.2022 US 202217883962
(71) Applicant: The Boeing Company, Arlington, VA 22202 (US)
(72) Inventor: ANSTEY, Timothy W, Arlington, 22202 (US); CALLAHAN, Kevin S, Arlington, 22202 (US); HETTICK, Lawrence Dean, Arlington, 22202 (US); HADLEY, Kyle Mclaren, Arlington, 22202 (US)
(74) Representative: Boult Wade Tennant LLP

(57) **Abstract**

Systems and methods for monitoring cargo that is loaded onto a vehicle. One or more sensors are positioned and configured to scan the cargo unit. Signals from the sensors are transmitted through a communication network to a control unit. The control unit determines a Sit based on the signals from the sensors. The control unit can also determine other aspects about the loading and unloading process to increase the efficiency.

## Description

### TECHNOLOGICAL FIELD

The present disclosure relates generally to monitoring cargo and, more specifically, a system for scanning cargo during loading onto a vehicle to determine a three-dimensional shape of the cargo.

### BACKGROUND

Cargo can be shipped in a variety of configurations depending on the context. Cargo can be packaged in containers and stacked on pallets or within the interior space of shipping container. Some cargo is shipped separately without being packaged in a container, such as large industrial equipment that is not applicable for packaging in a container. The different cargo has different shapes and sizes.

An objective in shipping cargo is to have a high efficiency. The efficiency is the amount of cargo that can be shipped on a vehicle. A vehicle with a higher efficiency is more profitable than a vehicle with a lower efficiency.

One issue that affects efficiency is the amount of cargo that is loaded onto a container. The cargo should be loaded onto the container to maximize the usage of the available space and minimize gaps and other spaces. The efficiency of a loaded container can be difficult to determine as the container may not be evaluated prior to loading onto the vehicle.

Another issue that affects the efficiency is the loading of the cargo onto the vehicle. The vehicle has a limited amount of available space to hold cargo. Examples include a cargo hold of an aircraft, and the interior of over-the-road trailer. The cargo should be loaded to fill the available space and reduce the amount of unused space. Efficiently loading the vehicle can be problematic due to the various shapes and sizes of the cargo that is loaded onto the vehicle. Further, the space on the vehicle can have various shapes and sizes. In some examples, a cargo hold in an aircraft can have one or more curved walls that conform to the overall cylindrical shape of the fuselage of the aircraft.

### SUMMARY

There is provided a system to monitor loading a cargo unit onto a vehicle. The system comprises one or more sensors mounted to the vehicle and configured to scan the cargo unit. A communication network is mounted in the vehicle and configured to transmit signals from the one or more sensors. A control unit comprises processing circuitry configured to determine a three-dimensional shape of the cargo unit based on the signals from the sensors.

Optionally, the one or more sensors comprise a first sensor and a second sensor that are each mounted to the vehicle and spaced apart with the first sensor and the second sensor comprising different fields of view to simultaneously scan different sections of the cargo unit.

Optionally, at least one of the sensors are mounted at a door of the vehicle and at least one of the sensors is mounted within an interior of the vehicle and away from the door.

Optionally, the control unit is configured to determine an efficiency of the cargo unit based on the three-dimensional shape relative to an outer envelope of the cargo unit.

Optionally, the control unit is configured to prevent loading the cargo unit onto the vehicle when the efficiency is below a predetermined amount.

Optionally, the control unit is further configured to: receive first ones of the signals from a first scan of the cargo unit taken at a first time; determine a first three-dimensional shape of the cargo unit based on the first ones of the signals; receive second ones of the signals from a second scan of the cargo unit taken at a second time; determine a second three-dimensional shape of the cargo unit based on the second ones of the signals; compare the first three-dimensional shape and the second three-dimensional shape; and determine that the cargo unit has been damaged when the first three-dimensional shape is different than the second three-dimensional shape.

Optionally, the control unit is further configured to determine an amount of empty space in a cargo hold of the vehicle based on the three-dimensional shape of the cargo unit.

Optionally, the control unit is further configured to determine where to locate the cargo unit within a cargo hold of the vehicle based on the three-dimensional shape of the cargo unit.

Optionally, the one or more sensors are LiDAR sensors.

There is provided a non-transitory computer readable medium comprising instructions stored thereon that, when executed by processing circuitry of a control unit, configures the control unit to: receive signals from sensors that are mounted to a vehicle and configured to scan a cargo unit; determine a three-dimensional shape of the cargo unit based on the signals from the sensors; and determine a location for the cargo unit in a cargo hold of the vehicle based on the three-dimensional shape.

Optionally, the control unit is further configured to: determine an amount of unused space in the cargo hold after the cargo unit is loaded; and determine an efficiency of the cargo hold based on the unused space.

There is provided a method of monitoring cargo that is loaded onto a vehicle. The method comprises: scanning a cargo unit that is being loaded onto the vehicle; and determining a three-dimensional shape of the cargo unit based on the scanning.

Optionally, the method further comprises scanning the cargo unit while the cargo unit is moving through a door of the vehicle and into the vehicle.

Optionally, scanning the cargo unit that is being loaded onto the vehicle further comprises scanning the cargo unit from a first direction with a first sensor and scanning the cargo unit from a second direction with a second sensor and determining the three-dimensional shape based on the scans from the first sensor and the second sensor.

Optionally, the method further comprises: determining an outer envelope of the cargo unit; determining a difference between the outer envelope and the three-dimensional shape; and determining an efficiency of the cargo unit based on the difference.

Optionally, the method further comprises unloading the cargo unit from the vehicle prior to transport when the efficiency is below a predetermined level.

Optionally, the method further comprises determining a position and a size of gaps in the cargo unit with the gaps formed between an outer surface of the cargo unit and the outer envelope.

Optionally, the method further comprises determining where to position the cargo unit in a cargo hold of the vehicle based on the three-dimensional shape.

Optionally, the method further comprises determining whether the cargo unit can fit into the cargo hold based on the three-dimensional shape of the cargo unit.

Optionally, the three-dimensional shape of the cargo unit is a first three-dimensional shape with the method further comprising: determining a second three-dimensional shape of the cargo unit when the cargo unit is being unloaded from the vehicle; determining that the second three-dimensional shape is different than the first three-dimensional shape; and determining that the cargo unit was damaged based on the difference.

The features, functions and advantages that have been discussed can be achieved independently in various examples or may be combined in yet other examples, further details of which can be seen with reference to the following description and the drawings.

### BRIEF DESCRIPTION OF THE DRAWINGS

Figure 1 is a perspective view of a vehicle.
Figure 2 is a section view of the vehicle cut along line II-II of Figure 1.
Figure 3 is a side view of a vehicle with wings removed for clarity and illustrating sections of a cargo hold within the vehicle.
Figure 4 is a perspective view of a cargo unit comprises packages that are stacked onto a container.
Figure 5 is a perspective view of a cargo unit.
Figure 6 is a perspective view of a cargo unit.
Figure 7 is a side view of a vehicle with wings removed for clarity and illustrating a capture system.
Figure 8 is a schematic diagram of sensors with fields of view that extend across a door that leads into a vehicle.
Figure 9 is a schematic diagram of cargo units positioned in a cargo hold.
Figure 10 is a schematic diagram of a control unit.
Figure 11 is a flowchart diagram of a method of scanning a cargo unit.
Figure 12 is a perspective view of a cargo unit that includes induvial packages that are stacked together.
Figure 13 is a flowchart diagram of a method of determining the efficiency of a cargo unit.
Figure 14 is a schematic diagram of a volume of a cargo hold.
Figure 15 is a flowchart diagram of a method of loading the cargo hold to increase the efficiency.
Figure 16 is a flowchart diagram of a method of a method of determining whether there is damage to a cargo unit.
Figure 17 is a flowchart diagram of a method of loading cargo onto a vehicle.
Figure 18 is a flowchart diagram of a method of identifying cargo units and determining a position in the cargo hold.

### DETAILED DESCRIPTION

The present application is directed to systems and methods for monitoring cargo that is loaded onto a vehicle. One or more sensors are positioned and configured to scan the cargo unit. Signals from the sensors are transmitted through a communication network to a control unit. The control unit determines a three-dimensional shape of the cargo unit based on the signals from the sensors. The control unit can also determine other aspects about the loading and unloading process to increase the efficiency.

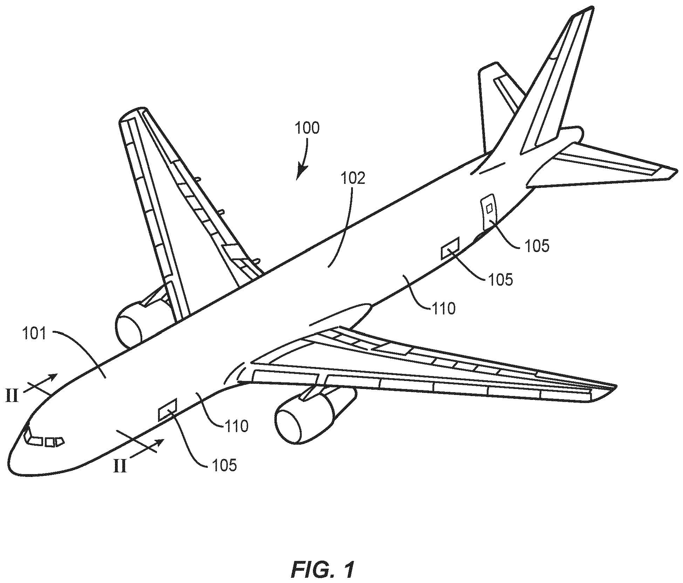

Figure 1 illustrates a vehicle 100 that is used to transport cargo. For purposes of explanation, this application uses an aircraft as an example of a vehicle 100. The monitoring system can also be used with other types of vehicles 100. As illustrated in Figure 1, the aircraft 100 includes a fuselage 101 configured to hold cargo. One or more doors 105 lead into a cargo hold 110 formed within the interior of the fuselage 101 and configured to hold the cargo during flight.

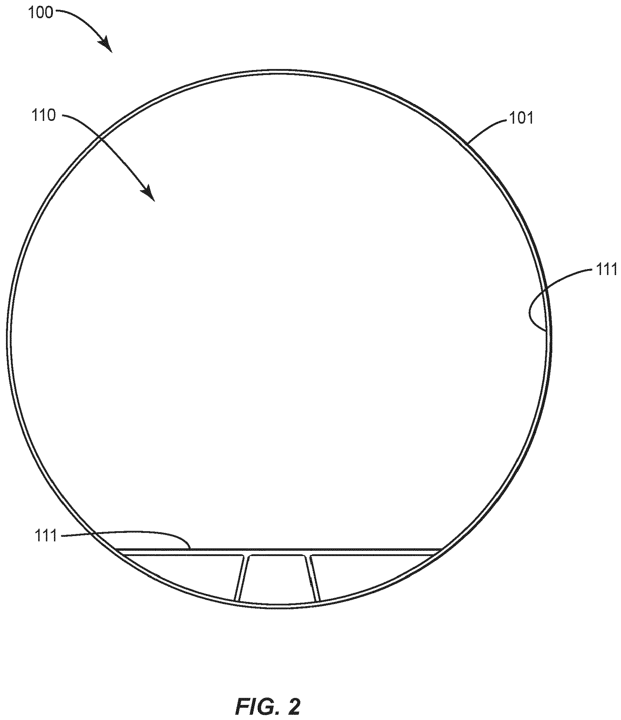

Figure 2 illustrates a sectional view of the fuselage 101 that includes the cargo hold 110.

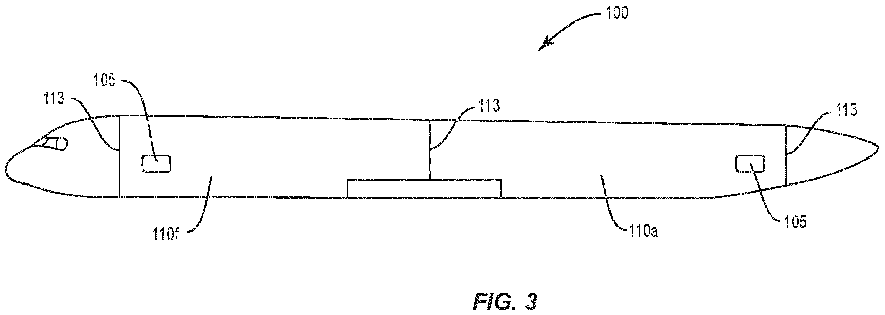

The cargo hold 110 is enclosed within the fuselage 101. The cargo hold 110 includes outer walls 111 that have one or more of a floor, ceiling, and side walls. The walls 111 can be formed by the interior of the walls of the fuselage 101 or can be separate components that are positioned within the interior of the fuselage 101. The cargo hold 110 can include various shapes and sizes to hold a wide variety of cargo. The cargo hold 110 can be divided into smaller sections as needed. In some examples, the cargo hold 110 divided into two lateral sections including a starboard section and a port section. The sections can also be divided along the length of the aircraft 100. Figure 3 illustrates a side schematic view of the fuselage 101 with the wings removed for clarity. The cargo hold 110 is divided by walls 113 in various sections along the length including a forward cargo section 110f and an aft cargo section 110a.

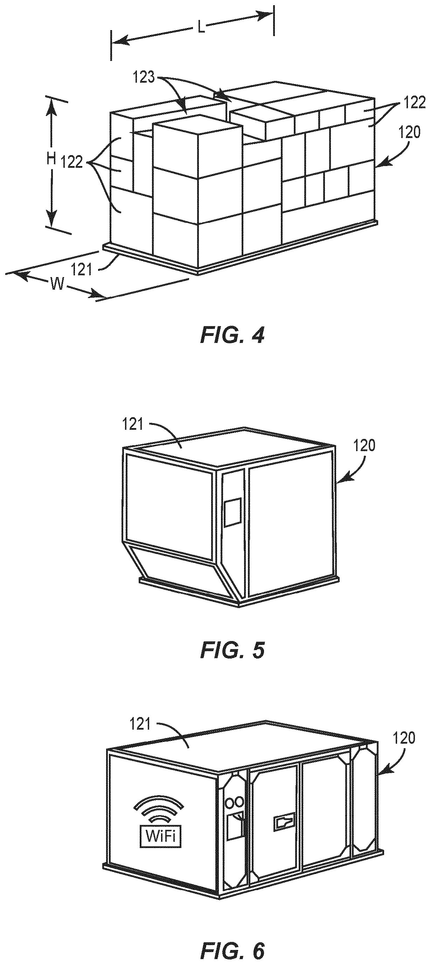

The cargo hold 110 holds cargo that is formed by one or more cargo units 120. The cargo units 120 can include a container 121 that support smaller packages 122. Figure 4 includes the container 121 being a pallet on which individual packages 122 are stacked. The individual packages 122 can include boxes, containers, etc. that hold the cargo. Netting, rope, wrap, etc. can extend around and maintain the packages 122 on the container 121. Figures 5 and 6 includes containers that extend around and form an enclosed interior space to hold the cargo. The cargo units 120 can also include individual products, such as cars, machinery, etc. that are relatively large and shipped as a unit without a container. The cargo units 120 can have various shapes and sizes to fit within the doors 105 that lead into the cargo hold 110.

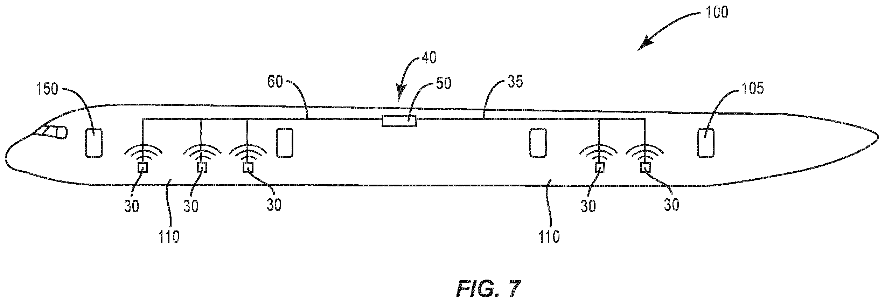

A capture system 40 determines aspects about the cargo units 120 that are loaded onto the vehicle 100. As illustrated in Figure 7, the capture system 40 includes sensors 30 positioned to capture one or more dimensions of the cargo units 120. The capture system 40 also includes a control unit 50 that receives signals from the sensors 30 to process the loading and/or unloading of the cargo units 120. The sensors 30 can communicate with the control unit 50 through wireless and/or wireless connections. In some examples, the communication network 60 includes a local area network that is part of the vehicle's communication system and/or network that provides wireless connectivity to the passengers in a cabin area. The communication network 60 can provide for wired or wireless transmission of the signals between the sensors 30 and control unit 50.

In some examples, the sensors 30 include cameras that capture a visual image of the cargo units 120. The sensors 30 can capture still images or video images of the cargo units 120. Other examples of sensors 30 that sense the cargo units 120 include but are not limited to thermal imaging devices, ultrasonic sensors, radar, sonar, LiDAR, and 3D scanning.

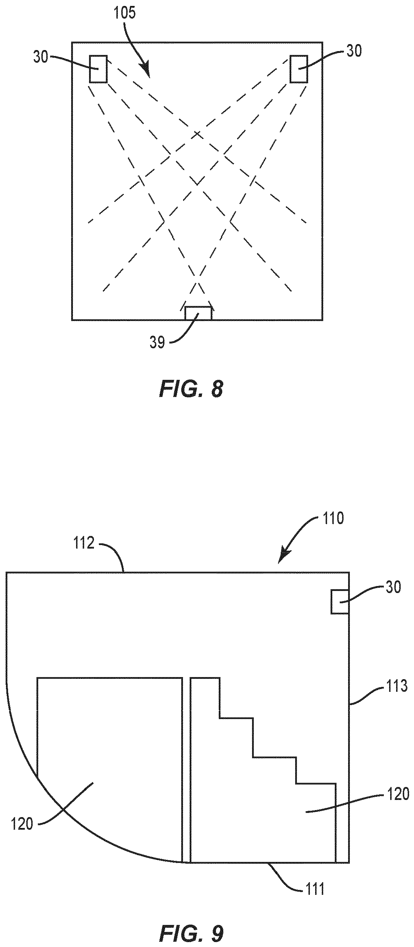

The sensors 30 are positioned to detect a size of the cargo units 120. The sensors 30 are positioned at the one or more doors 105 that lead into the cargo hold 110 as illustrated in Figure 8 and/or in the cargo hold 110 as illustrated in Figure 9. The sensors 30 have a field of view that provides for capturing the dimensions of the cargo units 120 at the various locations.

In some examples, a single sensor 30 is configured to detect the dimensions of the cargo units 120. In other examples, two or more sensors 30 together detect the dimensions with the sensors 30.

One or more sensors 30 can be portable to be positioned away from the vehicle 100. In some examples, the sensors 30 are hand-held units that are carried by ground personnel that work with the cargo prior to loading onto the vehicle.

Sensors 39 can obtain information from the cargo units 120 to identify the cargo units 120. The sensors 39 can include different sensing technologies, including but not limited to BLUETOOTH and bar code readers (e.g., tradition, QR). In some examples, the sensors 39 detect signals from an RFID tag that is attached to the containers 121 or packages 122. When the RFID tag passes through the field of the sensor 39, the sensor 39 senses signals from the RFID tag. The signals include identification information for the cargo, such as a unique serial number or other customized information associated with the cargo. The information is transmitted to the control unit 50 which uses the information to identify the cargo.

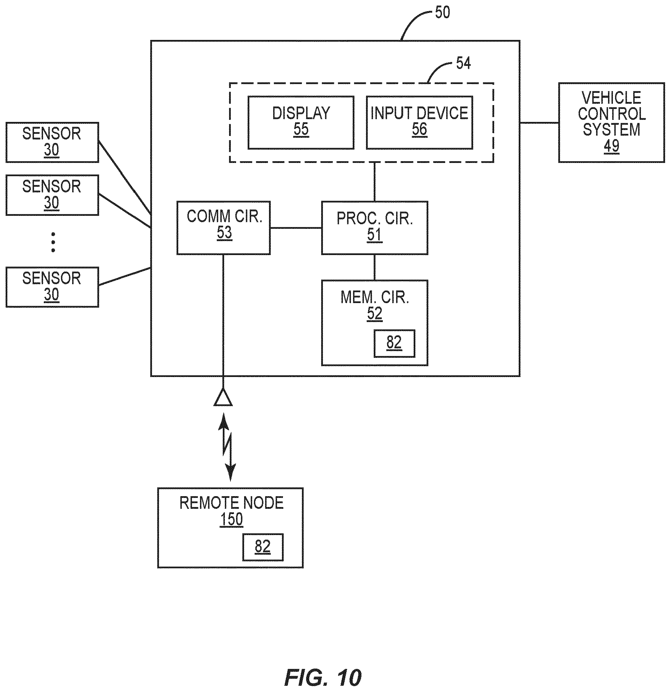

The control unit 50 determines the dimensional aspects of the cargo units 120. As illustrated in Figure 10, the control unit 50 includes control circuitry 51 and memory circuitry 52. The control circuitry 51 controls overall operation of the capture system 40 according to program instructions stored in the memory circuitry 52. The control circuitry 51 can include one or more circuits, microcontrollers, microprocessors, hardware, or a combination thereof. Memory circuitry 52 includes a non-transitory computer readable storage medium storing program instructions, such as a computer program product, that configures the control circuitry 51 to implement one or more of the techniques discussed herein. Memory circuitry 52 can include various memory devices such as, for example, read-only memory, and flash memory. Memory circuitry 52 can be a separate component as illustrated in Figure 10 or can be incorporated with the control circuitry 51. Alternatively, the control circuitry 51 can omit the memory circuitry 52, e.g., according to at least some examples in which the control circuitry 51 is dedicated and non-programmable.

The control unit 50 includes communication circuitry 53 that provides for communication functionality with the sensors 30. The communication circuitry 53 can provide for one-way communications from the sensors 30 or two-way communications that are both to and from the sensors 30. The communication circuitry 53 can also provide for communications with a remote monitoring node 150 that monitors the status of the cargo. The control unit 50 also communicates with other systems on the vehicle 100, such as a vehicle control system 49 that controls the operation of one or more larger functions of the vehicle 100. In some examples in which the vehicle 100 is an aircraft, the vehicle control system 49 is a flight control system that controls the operations of the aircraft during flight.

In some examples, as illustrated in Figure 10, the communications circuitry 53 is incorporated into the control unit 50. In other examples, the communications circuitry 53 is a separate system that is operatively connected to and controlled by the control unit 50.

A user interface 54 provides for a user to control one or more aspects of the capture system 40. The user interface 54 can include one or more input devices 56 such as but not limited to a keypad, touchpad, roller ball, and joystick. The user interface 54 can also include one or more displays 55 for displaying information to the traveler 140 and one or more input devices 56 for the user to enter commands to the control circuitry 51.

The capture system 40 scans the cargo units 120 during the loading process onto the vehicle 100. The scanning can occur at various times, including but not limited to as the cargo units 120 move through the door 105 and into the cargo hold 110, when the cargo units 120 are in the cargo hold 110, and when the cargo units 120 are on the ground prior to being loaded into the vehicle 100. The capture system 40 can scan the cargo units 120 a single time, or multiple times.

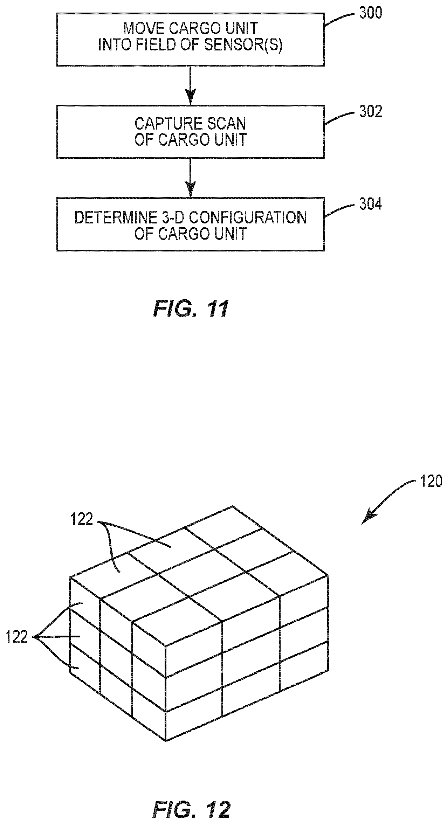

Figure 11 illustrates a method scanning a cargo unit 120. The cargo unit 120 is moved into the field of view of the sensor 30 (block 300). In some examples, this includes moving the cargo unit 120 to the sensor 30, such as moving the cargo unit 120 via a person or machinery through the door 105. In other examples, the sensor 30 is a hand-held device in which the user moves the sensor 30 to the cargo unit 120. In some examples, the cargo units 120 are placed on the ground adjacent to the vehicle 100 prior to loading and are scanned at that time.

The sensor 30 scans the cargo unit 120 (block 302). In some examples, this includes the sensor 30 taking a single scan, such as capturing a single image of the cargo unit 120 or performing a single RF scan of the cargo unit 120. In other examples, the sensor 30 takes multiple scans of the cargo unit 120. This can include taking multiple images of the cargo unit 120 as it passes through the door 105 or moving the sensor 30 to different positions relative to the cargo unit 120 and capturing the different images. The cargo unit 120 can be scanned by a single sensor 30 or from multiple sensors 30. The scans can occur simultaneously (e.g., multiple sensors 30 scan cargo unit 120 simultaneously from different directions) or over time (e.g., a sensor 30 scans the cargo unit 120 multiple times as it moves past the sensor 30 during loading). The scans from the sensors 30 are sent to the control unit 50 which determines the three-dimensional aspects of the cargo unit 120 (block 304). In some examples, the sensors 30 are 3D scanners that scan the cargo unit 120 and provide data to the control unit 50 that calculate the size and shape.

The control unit 50 determines the dimensional aspects of the cargo units 120. As illustrated in Figure 4, the dimensional aspects include the height H, width W, and length L. The control unit 50 determines the overall shape of the cargo unit 120 defined by the outer surfaces. The cargo units 120 can include a variety of different shapes and sizes as illustrated in the examples of Figures 4, 5, and 6.

The control unit 50 determines a package efficiency of the cargo unit 120. The efficiency is calculated as the density of the cargo unit 120 within an outer envelope that is defined by the heigh, width, and length. Figure 12 illustrates a cargo unit 120 that has a high efficiency. The cargo unit 120 is formed by individual packages 122 that are stacked into a cubicle shape. An outer envelope for the cargo unit 120 is defined by the planar dimensions of the height, width and length. The packages 122 are efficiently stacked as each of the sides of the cargo unit 120 are planar or substantially planar. Figure 4 illustrates a cargo unit 120 with a lower efficiency. Gaps 123 are formed within the cargo unit 120 along one or more of the sides. The gaps 123 are wasted space that could be filled with cargo thus lessening the efficiency of the cargo unit 120. Likewise, this lessens the overall efficiency of the vehicle 100 during transport as the cargo hold 110 is not fully loaded. The control unit 50 can provide notification indicating the efficiency of the cargo units 120 to provide for corrective measures, such as adding more cargo to the cargo unit 120 or repositioning the packages 122 to increase the efficiency.

The cargo units 120 can have an expected efficiency that is stored with information about the cargo unit 120. In some examples, this efficiency is provided by a shipping company that is shipping the cargo. The capture system 40 can reject a cargo unit 120 that has an efficiency below a predetermined amount. The rejected cargo unit 120 is removed from the vehicle 100 or otherwise not loaded. Personnel loading the vehicle 100 can add additional cargo thus increasing the efficiency and then loading the updated cargo unit 120.

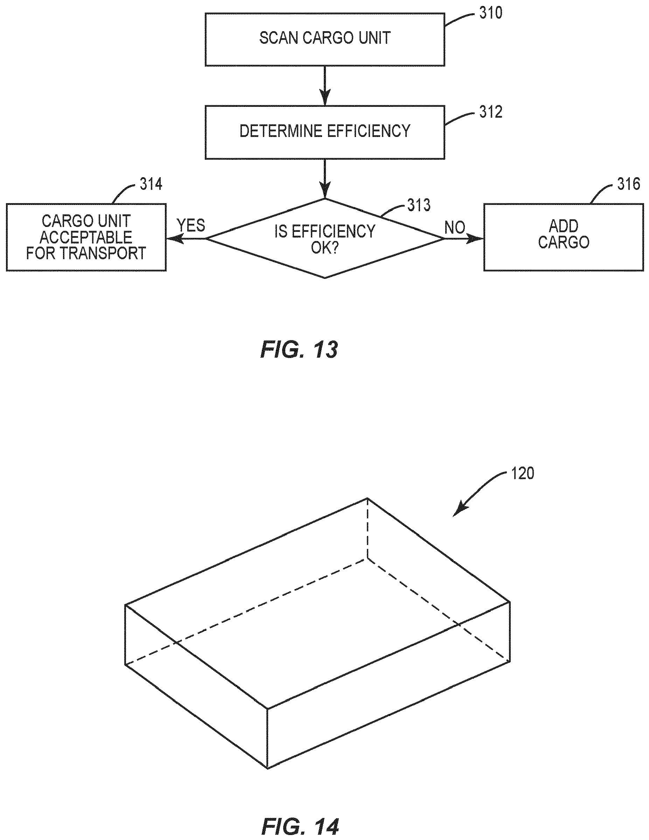

Figure 13 illustrates a method of determining the efficiency of a cargo unit 120. The capture system 40 scans the cargo unit 120 (block 310). The control unit 50 determines the efficiency of the cargo unit 120 based on the signals from the one or more sensors 30 (block 312). The control unit 50 determines whether the efficiency is acceptable (block 313). In some examples, this includes determining whether the density of the cargo unit 120 is above a predetermined amount. In other examples, the control unit 50 determines an accepted efficiency of the cargo unit 120 that is stored in the memory circuitry 52. The efficiency is acceptable when the scanned efficiency is the same or substantially the same as the expected efficiency. If the efficiency is acceptable, the cargo unit 120 is acceptable for transport (block 314). In some examples in which the cargo unit 120 is scanned during the loading process, an acceptable cargo unit 120 is loaded onto the vehicle 100.

If the efficiency is not acceptable, the cargo unit 120 is not loaded onto the vehicle 100. Additional cargo can be added to the cargo unit 120 to increase the efficiency (block 316). In some examples in which this occurs during the loading process, the cargo unit 120 is not loaded onto the vehicle 100 until the additional cargo is added. If the cargo unit is already loaded onto the vehicle 100, the cargo unit 120 can be unloaded and the additional cargo added. In some examples, the unloading occurs during a second leg of a transportation trip. For example, the cargo unit 120 is loaded onto the vehicle 100 and flown to a first connection airport. The cargo unit 120 is then removed from the vehicle 100 and additional cargo is added. The higher efficiency cargo unit 120 is then reloaded onto the vehicle 100 and transported to the final destination.

The control unit 50 can determine the efficiency of the cargo hold 110. As illustrated in Figure 14, the cargo hold 110 includes a volume contained within the outer walls. The efficiency of the cargo hold 110 is defined by the of the volume that is filled by cargo. A higher efficiency occurs when more of the volume is filled by the cargo, while a lower efficiency includes more empty space within the volume that is not filled by the cargo.

Sensors 30 within the cargo hold 110 can sense the position of the cargo units 120 and the empty space within the cargo hold 110. The control unit 50 receives the signals and determines an efficiency of the cargo hold 110. In some examples, the control unit 50 determines a shape and size of the empty space within the cargo hold 110. The control unit 50 is able to scan the cargo units 120 that are to be loaded to determine if the cargo units 120 will fit. The control unit 50 can also determine where to position the cargo unit 120 to increase the efficiency of the cargo hold 110.

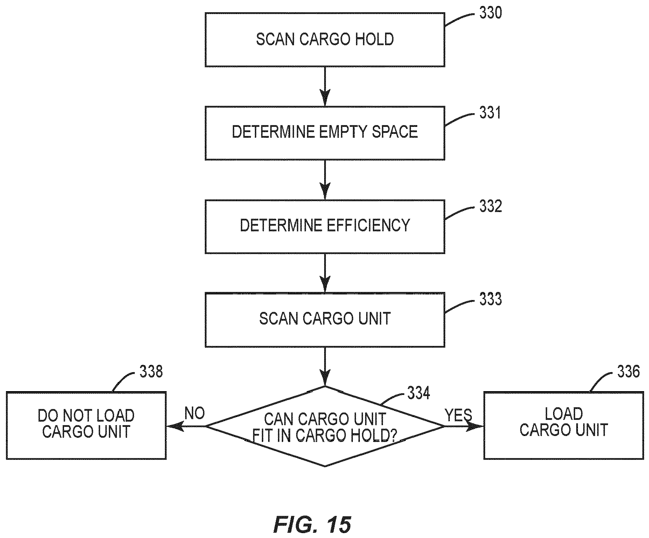

Figure 15 illustrates an example of loading the cargo hold 110 to increase the efficiency. One or more sensors 30 scan the cargo hold 110 (block 330). The control unit 50 receives the signals and determines the empty space remaining in the cargo hold 110 (block 331). The control unit 50 then determines the efficiency of the loaded cargo hold 110 (block 332).

A cargo unit 120 that has not yet been loaded is scanned (block 333). The control unit 50 determines the dimensions of the scanned cargo unit 120 and determines whether the cargo unit 120 can fit into the cargo hold 110 (block 334). If the control unit 50 determines that the cargo unit 120 can fit, the cargo unit 120 is loaded into the cargo unit 120 (block 336). In some examples, the control unit 50 can provide an indication of where the cargo unit 120 fits to best increase the efficiency. For example, the control unit 50 determines the smallest volume area of empty space in the cargo hold 110 that can receive the cargo unit 120. This positioning provides for loading the most cargo into the cargo hold 110 and with the least amount of remaining empty space.

If the control unit 50 determines that the cargo unit 120 does not fit into the cargo hold 110, the cargo unit 120 is not loaded (block 338). Personnel receiving this indication can move the cargo unit 120 out of the way to not block additional loading.

The scanning process can also be used by the control unit 50 to determine if there is damage to the cargo units 120. The control unit 50 determines if the shape of the cargo unit 120 is different than an expected shape and/or whether the shape has changed since an earlier scan.

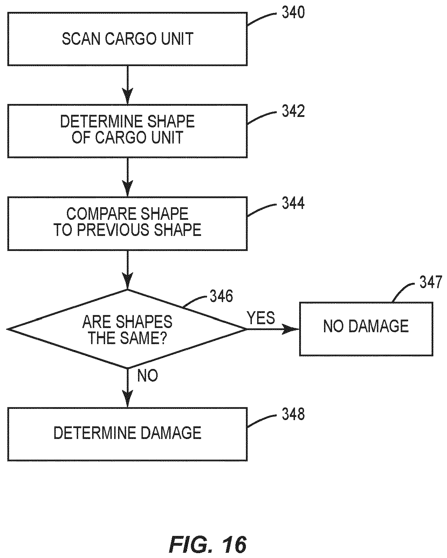

In some examples, the damage determination occurs prior to the cargo unit 120 being loaded onto the vehicle 100. Figure 16 illustrates a method of determining whether there is damage to the cargo unit 120. The cargo unit 120 is scanned by one or more sensors 30 (block 340) and the control unit 50 determines the shape of the cargo unit 120 (block 342). The control unit 50 then compares the shape to a previous shape (block 344). The previous shape can include a scan of the cargo unit 120 at an earlier time, such as but not limited to earlier in the shipping process, or when the packages 122 were positioned on a container 121 to create the cargo unit 120. In other examples, the previous shape is an expected shape of the cargo unit 120 based on the shapes of the packages 122 that are included in the cargo unit 120 and the known instructions for forming the cargo unit 120. The shape can also include the expected shape based on the cargo itself (i.e., a piece of industrial machinery that is not otherwise packaged in a container 121.

The control unit 50 determines whether the shapes are the same (block 346). If the shapes are the same, the control unit 50 determines that there is no damage (block 347). If the shapes are different, the control unit 348 determines that there is damage to the cargo unit 120 (block 348). The control unit 50 can determine the position of the damage on the cargo unit 120 and the extent of the damage. The position of the damage is based on the comparison of the two scans and the location of the differences in the scans. The amount of damage can be based on the extent of the differences in the shapes between the previous shape and the scanned shape. The greater the amount of difference, the greater the amount of damage.

In other examples, the control unit 50 determines if the cargo unit 120 is damaged while on the vehicle 100. The cargo unit 120 is first scanned when loaded onto the vehicle 100. The cargo unit 120 is then scanned again when unloaded from the vehicle 100. In some examples, the scans occur at the same location and by the same one or more sensors 30. For example, the scans occur when the cargo unit 120 is moving through the door 105 during both loading and unloading. The control unit 50 compares the two scans and determines whether they are the same. If the scans are the same, then the cargo unit 120 has not been damaged during the transportation. If the control unit 50 determines that the scans are different, the control unit 50 determines that the cargo unit 120 has been damaged. In some examples, the control unit 50 determines the position and extent of the change between the two scans to determine the extent of the damage.

The control unit 50 can further determine the weight of the cargo unit 120. This can include but is not limited to a known weight of the object provided by the manufacturer, or the weight determined by a scale when the cargo unit 120 is constructed. In other examples, the cargo unit 120 estimates the weight of the cargo unit 120 based on the scan. The weight can be based on the shape and size, as well as the type of cargo that is included in the cargo unit 120 which can be stored in a record associated with the cargo unit 120. Based on the determined weight, the control unit 50 can provide instructions to locate the cargo unit 120 in the cargo hold 110. This positioning provides for weight balancing of the vehicle 100.

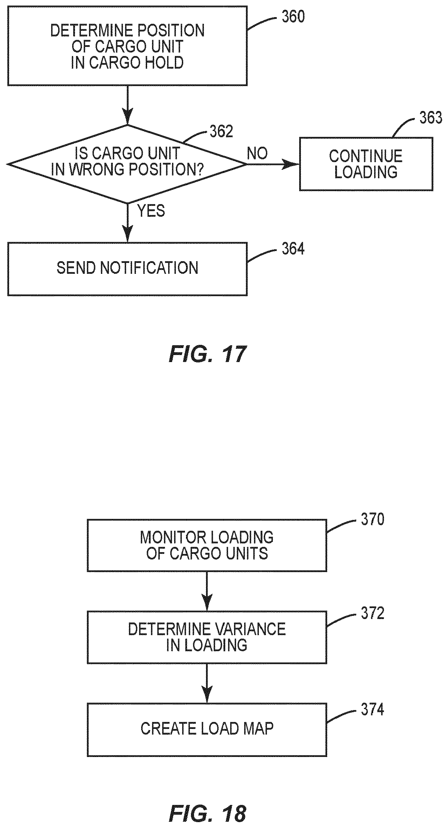

The control unit 50 can also determine a position for the cargo unit 120 on the vehicle 100 to provide for load balancing. The position at which the cargo unit 120 is located in the cargo hold 110 is sensed by one or more sensors 30. The control unit 50 uses the weight and size of the cargo unit 120, and the dimensions of the cargo unit 120. Figure 17 illustrates a method of loading cargo onto a vehicle 100. The control unit 50 monitors a position where the cargo unit 120 is located in the cargo hold 110 (block 360). The position is compared to an expected position (block 362). In some examples, the expected position is determined from a load plan developed prior to the trip and saved in the memory circuitry 52. If the position is correct, the cargo unit 120 remains in position and the loading process continues (block 363). In the event a cargo unit 120 is positioned at a position in the cargo hold 110 that deviates from the load plan, the control unit 50 provides a notification (block 364). The notification can be sent to one or more of the personnel loading the vehicle 100, the personnel operating the vehicle 100 (e.g., pilot, flight crew, driver), or a remote monitoring node 150. This notification can occur be sent at the time of the cargo unit 120 is located in the cargo hold 110. This prevents the cargo unit 120 from being blocked in the cargo hold 110 and unable to be moved.

The control unit 50 can also determine an overall accuracy of the vehicle loading relative to a load plan. Figure 18 illustrates a method in which the cargo units 120 are identified by the sensors 30 and their position in the cargo hold 110 is determined (block 370). The position of the cargo units 120 is compared relative to the load plan (block 372). A map is created that illustrates the deviation between the load plan and the actual load (block 374). The map is sent to various personnel for this review prior to the vehicle departing for the trip.

The map can include various criteria of the cargo units 120 based on information from the sensors 30. Criteria includes but is not limited to dimension, weight, and hazard determinations. size, prior to the cargo unit 120 being blocked by other cargo units 120. The control unit 50 can also monitor an amount of variance between the load plan and the actual loading. If the variance exceeds a predetermined amount, the control unit 50 can notify personnel of the issue.

A record 82 of the cargo can be maintained during the transportation process at one or more of the control unit 50 and the remote monitoring node 150. The record 82 can apply to the individual cargo units 120, a container 121, and/or cargo package 122. The record 82 can include information about the cargo, such as but not limited to shape, size, weight, contents. The record 82 can also include any particular shipping instructions, such as an operational range of one or more environmental conditions (e.g., storage between 50°F-80°F (10°C-27°C)).

The system 40 can be used on a variety of vehicles 100. Vehicles 100 include but are not limited to aircraft, watercraft, and freight trailers for trains and trucks. In some examples, the system 40 is used in a passenger aircraft that includes a cabin area for transporting passengers and a separate cargo hold 110.

By the term "substantially" with reference to amounts or measurement values, it is meant that the recited characteristic, parameter, or value need not be achieved exactly. Rather, deviations or variations, including, for example, tolerances, measurement error, measurement accuracy limitations, and other factors known to those skilled in the art, may occur in amounts that do not preclude the effect that the characteristic was intended to provide.

The present examples are to be considered in all respects as illustrative and not restrictive, and all changes coming within the meaning of the appended claims are intended to be embraced therein.

## Claims

1. A vehicle 100, optionally an aircraft, including a system to monitor loading a cargo unit 120 onto the vehicle 100, the system comprising:
one or more sensors 30 mounted to the vehicle 100 and configured to scan the cargo unit 120;
a communication network 35 mounted in the vehicle 100 and configured to transmit signals from the one or more sensors 30; and
a control unit 50 comprising processing circuitry configured to determine a three-dimensional shape of the cargo unit 120 based on the signals from the sensors 30.

2. The vehicle 100 of claim 1, wherein the one or more sensors 30 comprise a first sensor and a second sensor that are each mounted to the vehicle 100 and spaced apart, the first sensor and the second sensor comprising different fields of view to simultaneously scan different sections of the cargo unit 120.

3. The vehicle 100 of claim 1 or 2, wherein at least one of the sensors 30 is mounted at a door 105 of the vehicle 100 and at least one of the sensors 30 is mounted within an interior of the vehicle 100 and away from the door.

4. The vehicle 100 of any of claims 1-3, wherein the control unit 50 is configured to determine an efficiency of the cargo unit 120 based on the three-dimensional shape relative to an outer envelope of the cargo unit 120.

5. The vehicle 100 of claim 4, wherein the control unit 50 is configured to prevent loading the cargo unit 120 onto the vehicle 100 when the efficiency is below a predetermined amount.

6. The vehicle 100 of any of claims 1-5, wherein the control unit 50 is further configured to:
receive first ones of the signals from a first scan of the cargo unit 120 taken at a first time;
determine a first three-dimensional shape of the cargo unit 120 based on the first ones of the signals;
receive second ones of the signals from a second scan of the cargo unit 120 taken at a second time;
determine a second three-dimensional shape of the cargo unit 120 based on the second ones of the signals;
compare the first three-dimensional shape and the second three-dimensional shape; and
determine that the cargo unit 120 has been damaged when the first three-dimensional shape is different than the second three-dimensional shape.

7. The vehicle 100 of any of claims 1-6, wherein the control unit 50 is configured to determine an amount of empty space in a cargo hold 110 of the vehicle 100 based on the three-dimensional shape of the cargo unit 120.

8. The vehicle 100 of any of claims 1-7, wherein the control unit 50 is configured to determine where to locate the cargo unit 120 within a cargo hold 110 of the vehicle 100 based on the three-dimensional shape of the cargo unit 120.

9. The vehicle 100 of any of claims 1-8, wherein the one or more sensors 30 are LiDAR sensors.

10. A method of monitoring cargo that is loaded onto a vehicle 100, optionally an aircraft, the method comprising:
scanning a cargo unit 120 that is being loaded onto the vehicle 100; and
determining a three-dimensional shape of the cargo unit 120 based on the scanning.

11. The method of claim 10, further comprising:
scanning the cargo unit 120 while the cargo unit 120 is moving through a door 105 of the vehicle 100 and into the vehicle 100; and/or
scanning the cargo unit 120 that is being loaded onto the vehicle 100 from a first direction with a first sensor and scanning the cargo unit 120 that is being loaded onto the vehicle 100 from a second direction with a second sensor and determining the three-dimensional shape based on the scans from the first sensor and the second sensor.

12. The method of claim 10 or 11, further comprising:
determining an outer envelope of the cargo unit 120;
determining a difference between the outer envelope and the three-dimensional shape; and
determining an efficiency of the cargo unit 120 based on the difference.

13. The method of claim 12, further comprising:
unloading the cargo unit 120 from the vehicle 100 prior to transport when the efficiency is below a predetermined level;
determining a position and a size of gaps in the cargo unit 120 with the gaps formed between an outer surface of the cargo unit 120 and the outer envelope;
determining where to position the cargo unit 120 in a cargo hold 110 of the vehicle 100 based on the three-dimensional shape;
or any combination thereof.

14. The method of any of claims 10-13, further comprising:
determining whether the cargo unit 120 can fit into the cargo hold 110 based on the three-dimensional shape of the cargo unit 120; and, optionally,
wherein the three-dimensional shape of the cargo unit 120 is a first three-dimensional shape, and the method further comprises:
determining a second three-dimensional shape of the cargo unit 120 when the cargo unit 120 is being unloaded from the vehicle 100;
determining that the second three-dimensional shape is different than the first three-dimensional shape; and
determining that the cargo unit 120 was damaged based on the difference.

15. A computer program comprising computer readable instructions that, when executed by a computer processing system of a control unit 50, causes the control unit 50 to perform the method of any of claims 10-14, or a non-transitory computer readable medium having such a computer program stored thereon.
